**Europäisches Patentamt**

(19) **European Patent Office**

**Office européen des brevets**

(11) Veröffentlichungsnummer : **0 315 576 B1**

(12) # EUROPÄISCHE PATENTSCHRIFT

(45) Veröffentlichungstag der Patentschrift :
**25.03.92 Patentblatt 92/13**

(51) Int. Cl.$^5$ : **B23K 20/22,** B32B 15/01,
C21D 8/02

(21) Anmeldenummer : **88730223.0**

(22) Anmeldetag : **30.09.88**

(54) **Verfahren zur Herstellung von plattierten Stahlblechen.**

(30) Priorität : **01.10.87 DE 3733481**

(43) Veröffentlichungstag der Anmeldung :
**10.05.89 Patentblatt 89/19**

(45) Bekanntmachung des Hinweises auf die
Patenterteilung :
**25.03.92 Patentblatt 92/13**

(84) Benannte Vertragsstaaten :
**AT DE FR IT**

(56) Entgegenhaltungen :
**EP-A- 0 233 437
DE-A- 3 323 929
FR-A- 2 594 732
US-A- 4 178 417**

(73) Patentinhaber : **MANNESMANN
Aktiengesellschaft
Mannesmannufer 2
W-4000 Düsseldorf 1 (DE)**

(72) Erfinder : **Von Hagen, Ingo, Dr.-Ing.
Schumannstrasse 1
W-4150 Krefeld 1 (DE)**
Erfinder : **Hof, Wolfram, Dr.-Ing.
Oldenburger Strasse 4B
W-4330 Mülheim (DE)**
Erfinder : **Zeislmair, Ulrike, Dr.-Ing.
Liegnitzerstrasse 2
W-4005 Meerbusch (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

EP 0 315 576 B1

**Beschreibung**

Die Erfindung bezieht sich auf ein Verfahren zur Herstellung von plattierten Stahlblechen, deren Trägerwerkstoff hochfest und hochzäh ist, durch Warmwalzen von Brammen, die mit einer Auflage aus einem austenitischen Plattierwerkstoff belegt sind.

In zunehmendem Maße werden korrosionsbeständige Leitungsrohre gefordert, da aufgrund der gestiegenen Aggressivität der zu fördernden Medien die bisher üblichen Leitungsrohre aus mikrolegierten Stählen diesen Korrosionsbeanspruchungen nicht mehr standhalten. Als Lösung bieten sich Leitungsrohre aus rein austenitischen Stählen an. Aufgrund ihrer naturgemäß niedrigen Streckgrenzen und der hohen Werkstoffkosten werden diese Werkstoffe z.B. bei geschweißten Leitungsrohren mit einem Durchmesser über 508 mm jedoch nicht für Vollwandrohre, sondern nur als Plattierungswerkstoff für innenplattierte Rohre eingesetzt. Mikrolegierte höherfeste Baustähle übernehmen bei derartigen Rohren die Funktion des Trägerwerkstoffs. Diese Werkstoffkombination bringt jedoch bei üblicher Blechfertigung sowie bei der Wärmebehandlung der gewalzten Bleche Probleme mit sich.

Grundvoraussetzung für eine ausreichende Spannungsrißbeständigkeit ist der ausscheidungsfreie Zustand der austenitischen Plattierungsschicht. Bei einer Walzung der plattierten Bleche, wie sie für TM-gewalzte Bleche aus mikrolegierten Stählen üblich ist, kann im Walzzustand keine Ausscheidungsfreiheit erreicht werden. Diese Forderung kann nur erfüllt werden, wenn die Bleche nach dem Walzen lösungsgeglüht werden. Dabei liegen die Lösungstemperaturen je nach chemischer Zusammensetzung der austenitischen Stähle zwischen 1050 und 1150 °C.

Um nun bei einem Lösungsglühen der plattierten Bleche im Trägerwerkstoff günstige mechanische Eigenschaften vorliegen zu haben, bietet sich als Lösung ein Vergüten an, bei dem die Härtetemperatur auf die Höhe der Lösungsglühtemperatur des Austenits angehoben wird, also der Verfahrensweg, der gegenwärtig überwiegend bei plattierten Blechen zur Anwendung kommt. Dieser Herstellungsweg über Blechfertigung und Vergütung ist relativ umständlich und kostenintensiv. Außerdem sind die Zähigkeitseigenschaften nur bedingt zufriedenstellend.

Aufgabe der Erfindung ist es daher, ein Verfahren gemäß dem Oberbegriff des Patentanspruchs 1 anzugeben, mit dem plattierte Stahlbleche herstellbar sind, deren Trägerwerkstoff gleichzeitig hochfest und hochzäh ist, d.h. deren 0,2 % - Dehngrenze mindestens 448 N/mm² beträgt und deren Zähigkeit quer zur Verformungsrichtung bei -20 °C durch eine ISO-V-Kerbschlagarbeit von über 200 J gekennzeichnet ist. Das Verfahren soll gegenüber herkömmlichen Herstellverfahren nicht kostenintensiver sein.

Gelöst wird diese Aufgabe durch ein Verfahren mit den Merkmalen des Patentanspruchs 1. Vorteilhafte Weiterbildungen dieses Verfahrens sind in den Unteransprüchen 2 - 7 angegeben.

Der Erfindung liegt der Gedanke zugrunde, im Trägerwerkstoff eines plattierten Bleches im Vergleich zum vergüteten Zustand bessere mechanische Eigenschaften sowie eine ausscheidungsfreie Plattierungsschicht durch ein gezieltes Warmwalzen einzustellen. Hierzu wurde eine Legierung für den Trägerwerkstoff ausgewählt, wie sie im wesentlichen als Werkstoff für TM-gewalzte Bleche aus der DE-PS 33 23 929 bekannt ist. Dieser Legierung, bei der die Obergrenzen für Stickstoff, Titan und Niob vergleichsweise stärker eingeschränkt sind, kann gemäß dem Patentanspruch 2 zur weiteren Erhöhung der Festigkeit Chrom und/oder Molybdän in einer Größenordnung von zusammen maximal 0,35 % zugesetzt sein.

Das erfindungsgemäße Warmwalzen kann die erforderliche Korrosionsbeständigkeit (Spannungsrißbeständigkeit) des Plattierungswerkstoffs bei gleichzeitiger Gewährleistung der angestrebten Zähigkeits- und Festigkeitswerte deswegen erzielen, weil wegen der hohen Ziehtemperatur und des damit verbundenen größeren Diffusionsausgleichs die Ausscheidungsbildung im Plattierungswerkstoff der eingesetzten Brammen verlangsamt, d.h. zu tieferen Temperaturen verschoben wird. Dabei wird gleichzeitig angestrebt, die Zieh- und Endwalztemperatur im Hinblick auf die zu erreichenden mechanischen Eigenschaften des Trägerwerkstoffs möglichst niedrig zu halten. Je niedriger der Anteil der Mikrolegierungselemente (Nb, Ti), umso niedriger sollte auch die Ziehtemperatur sein. Die im übrigen hinsichtlich des Verformungsgrades in den beiden Walzphasen und der Abschreckbehandlung (z.B. in Wasser) einzuhaltenden Randbedingungen konnten in umfangreichen Versuchen ermittelt werden. Für die Durchführung des erfindungsgemäßen Verfahrens ist es unwesentlich, in welchem Zustand die eingesetzten Brammen bezüglich der Auflage des Plattierungswerkstoffs (z.B. spreng- oder gießplattiert oder in Kastenbauweise) sind.

Ein wesentlicher Vorteil des erfindungsgemäßen Verfahrens ist es, daß es eine nachträgliche Vergütungsbehandlung überflüssig macht, da die Abschreckbehandlung in jedem Fall aus der Walzhitze heraus vorgenommen wird. Wenn dabei nach Erreichen einer Temperatur zwischen 450 und 550 °C die weitere Abkühlung an Luft, also nicht mehr beschleunigt erfolgt, kann sogar auf jegliche nachträgliche Erwärmung verzichtet werden. Wird die Abschreckbehandlung dagegen bis auf Raumtemperatur durchgeführt, so schließt sich eine Anlaßbehandlung bei Temperaturen zwischen 450 und 650 °C an, die jedoch im Vergleich zu einer Vergütungsbehandlung im Rahmen der bisher üblichen Herstellverfahren für plattierte Bleche immer noch deutlich kostengünstiger ist.

Anhand der nachfolgenden Ausführungsbeispiele wird die Erfindung näher erläutert:

Beispiel 1:

Für die Versuchswalzungen kam als Trägerwerkstoff ein mikrolegierter Baustahl mit der nachstehenden chemischen Zusammensetzung zum Einsatz:

0,05 % C
0,24 % Si
1,98 % Mn
0,028 % Al
0,0041 % N
0,022 % Ti
0,015 % P
0,0014 % S

Als Plattierungswerkstoff wurde ein Incoloy 825 (20 % Cr, 40 % Ni, 3 % Mo, 2 % Cu, 1 % Ti) verwendet.

Die präparierte Einsatzbramme wurde bei 1120 °C gezogen, bei dieser Temperatur mit einer Umformung von 44 % auf 67,5 mm vorgewalzt. Das Endwalzen erfolgte bei 995 °C mit einer Umformung von weiteren 78 % auf 15 mm, wobei die Bramme im letzten Stich der Endwalzphase eine Abnahme von 25 % erfuhr. Das warmgewalzte Blech wurde dann mit einer Laminar-Vorhangkühlung bei einer mittleren Abkühlgeschwindigkeit von 26 °C/s auf 515 °C abgeschreckt. Die weitere Abkühlung bis auf Raumtemperatur erfolgte an Luft. Aus dem Trägerwerkstoff des so behandelten Blechs wurden zur Prüfung der mechanischen Eigenschaften Proben entnommen, die zu folgenden Werten führten:

$R_{p0,2}$ = 463 N/mm²
$R_m$ = 557 N/mm²
$AV_{-20°C}$ (ISO-V quer) = 278 J

Der Plattierungswerkstoff war ausscheidungsfrei.

Beispiel 2:

In einer zweiten Walzserie kam als Trägerwerkstoff eine gegenüber dem ersten Beispiel insbesondere im Kohlenstoff- und Niobgehalt leicht abgeänderte Analysenvariante zum Einsatz. Die vollständige Analyse wurde wie folgt ermittelt:

0,031 % C
0,32 % Si
2,09 % Mn
0,032 % Al
0,0035 % N
0,023 % Ti
0,016 % Nb
0,013 % P
0,0013 % S

Als Plattierungswerkstoff wurde der austenitische Stahl X I NiCrMoCu 3127 (Werkstoff 1.4563) ausgewählt.

Die Brammenziehtemperatur lag bei 1150 °C. Nach einer Umformung von wiederum 44 % in der Vorwalzphase erfolgte das Endwalzen bei 1005 °C. Die Umformgrade in der Endwalzphase entsprachen denen des ersten Ausführungsbeispiels.

Die beschleunigte Abkühlung nach dem Endwalzen erfolgte bis auf 465 °C. Die Abkühlgeschwindigkeit lag im Mittel bei 25 °C/s. Die weitere Blechabkühlung bis auf Raumtemperatur erfolgte an Luft.

Die mechanischen Eigenschaften des Bleches ergaben:

$R_{p0,2}$ = 490 N/mm²
$R_m$ = 625 N/mm²
$AV_{-20°C}$ (ISO-V quer) = 291 J

Auch in diesem Fall war der Plattierungswerkstoff ausscheidungsfrei.

Beispiel 3:

In einer weiteren Walzserie wurden zusätzliche Bleche aus den Werkstoffen entsprechend dem Beispiel 2 hergestellt. Nach dem Endwalzen wurden die Bleche mit Abkühlgeschwindigkeiten von ebenfalls 25 °C/s abgekühlt aber bis auf Raumtemperatur und anschließend 15 min bei 550 °C angelassen.

Die Prüfung der mechanischen Eigenschaften führte zu folgenden Ergebnissen:

$R_{p0,2}$ = 502 N/mm²
$R_m$ = 589 N/mm²
$AV_{-20°C}$ (ISO-V quer) = 283 J

## Patentansprüche

1. Verfahren zur Herstellung von plattierten Stahlblechen, deren Trägerwerkstoff hochfest und hochzäh ist, durch Warmwalzen von Brammen, die mit einer Auflage aus einem austenitischen Plattierwerkstoff belegt sind, **dadurch gekennzeichnet,**
daß als Trägerwerkstoff ein Stahl der Zusammensetzung (Massenprozent)

```
0,03   -  0,09  %   C
0,15   -  0,50  %   Si
1,50   -  2,20  %   Mn
0,010  -  0,050 %   Al
0,0025-  0,006  %   N
0,010  -  0,025 %   Ti
          bis 0,030 %   Nb
          bis 0,020 %   P
          bis 0,005 %   S
```

Rest Eisen und erschmelzungsbedingte Verunreinigungen verwendet wird, wobei das Massenverhältnis Ti/N größer 3,5 ist, daß die Brammen in Abhängigkeit vom Gehalt an Mikrolegierungselementen bei Temperaturen von 1100-1200 °C in den in zwei Phasen durchzuführenden Walzvorgang eingesetzt werden, wobei die erste Walzphase mit einem Verformungsgrad von mindestens 30 % durchgeführt wird und die Endwalzphase bei Temperaturen zwischen 950 und 1050 °C, d.h. oberhalb der Temperatur, bei der durch die Verformung im austenitischen Plattierungswerkstoff Ausscheidungen induziert werden können, mit einem Verformungsgrad von mindestens weiteren 40 % durchgeführt wird, wobei der Verformungsgrad im letzten Walzstich der Endwalzphase mindestens 12 % beträgt und daß die plattierten Bleche unmittelbar danach mit einer Geschwindigkeit von mindestens 12 K/s auf eine Temperatur zwischen 450-550 °C abgeschreckt werden.

2. Verfahren nach Anspruch 1,
**dadurch gekennzeichnet,**
daß als Trägerwerkstoff ein Stahl eingesetzt wird, dem zur Erhöhung der 0,2 %-Dehngrenze auf über 500 N/mm² zusätzlich Chrom und/oder Molybdän zulegiert wurde, wobei der Gehalt an diesen Elementen auf zusammen höchstens 0,35 % beschränkt wird.

3. Verfahren nach Anspruch 1 oder 2,
**dadurch gekennzeichnet,**
daß die Einsatztemperatur der Brammen bei 1120 °C liegt.

4. Verfahren nach einem der Ansprüche 1 bis 3,
**dadurch gekennzeichnet,**
daß der Verformungsgrad in der Endwalzphase mehr als 60 % beträgt.

5. Verfahren nach einem der Ansprüche 1 - 4,
**dadurch gekennzeichnet,**
daß der Verformungsgrad im letzten Stich der Endwalzphase mehr als 20 % beträgt.

6. Verfahren nach einem der Ansprüche 1 - 5,
**dadurch gekennzeichnet,**
daß das Abschrecken bei Erreichen einer Temperatur zwischen 450 und 550 °C abgebrochen wird und die weitere Abkühlung auf Raumtemperatur an Luft erfolgt.

7. Verfahren nach einem der Ansprüche 1 - 5,
dadurch gekennzeichnet,
daß das Abschrecken bis auf Raumtemperatur durchgeführt wird und die Bleche danach bei Temperaturen von 450 - 650 °C angelassen werden.

## Revendications

1. Procédé pour fabriquer des tôles d'acier plaquées, dont le matériau de support présente une résistance mécanique et une ténacité élevées, par laminage à chaud de brames, qui sont garnies d'un revêtement en une matière de placage austénitique,
caractérisé en ce que,
en tant que matériau de support, on utilise un acier ayant la composition suivante (pourcentages massiques) :

| | | | | |
|---|---|---|---|---|
| C | 0,03 | – | 0,09 | % |
| Si | 0,15 | – | 0,50 | % |
| Mn | 1,50 | – | 2,20 | % |
| Al | 0,010 | – | 0,050 | % |
| N | 0,0025 | – | 0,006 | % |
| Ti | 0,010 | – | 0,025 | % |
| Nb | jusqu'à | | 0,030 | % |
| P | jusqu'à | | 0,020 | % |
| S | jusqu'à | | 0,005 | % |

le restant étant du fer et des impuretés liées à l'élaboration de l'acier, le rapport massique Ti/N étant supérieur à 3,5, en ce que les brames sont chargées dans le processus de laminage, réalisé en deux phases, selon la teneur en éléments micro-alliés à des températures de 1100-1200°C, la première phase de laminage étant effectuée à un degré de déformation d'au moins 30%, et la phase de laminage final étant effectuée à un degré de déformation d'au moins encore 40%, à ces températures entre 950 et 1050°C, c'est-à-dire au-dessus de la température pour laquelle des précipitations peuvent être induites dans la matière de placage austénitique par la déformation, le degré de déformation valant au moins 12% dans la dernière passe de la phase de laminage final, et en ce que les tôles plaquées sont trempées immédiatement après à une vitesse d'au moins 12° K/s à une température entre 450-550°C.

2. Procédé selon la revendication 1,
caractérisé en ce que,
en tant que matériau de support, on utilise un acier qui a été allié de plus à du chrome et/ou du molybdène, pour augmenter la limite élastique à 0,2% à plus de 500 N/mm2, la teneur de ces éléments étant limitée au plus à 0,35% ensemble.

3. Procédé selon la revendication 1 ou 2,
caractérisé en ce que
la température de mise en oeuvre des brames est de 1120°C.

4. Procédé selon une des revendications 1 à 3,
caractérisé en ce que
le degré de déformation est supérieur à 60% dans la phase de laminage final.

5. Procédé selon une des revendications 1 à 4,
caractérisé en ce que
le degré de déformation dans la dernière passe de la phase de laminage final est supérieur à 20%.

6. Procédé selon une des revendications 1 à 5,
caractérisé en ce que
la trempe est interrompue lorsque l'on atteint une température entre 450 et 550°C, et le refroidissement ultérieur à température ambiante a lieu à l'air.

7. Procédé selon une des revendications 1 à 5,
caractérisé en ce que

la trempe est effectuée jusqu'à température ambiante, et les tôles sont ensuite soumises à un revenu à des températures de 450-650°C.

## Claims

1. A process for the production of plated steel sheets, the carrier material of which has a high level of strength and toughness, by hot-rolling of slabs which are coated with a layer of an austenitic plating material, characterised in that
steel of the following composition (mass per cent)

```
0.03 - 0.09 %  C
0.15 - 0.50 %  Si
1.50 - 2.20 %  Mn
0.010 - 0.050 %  Al
0.0025 - 0.006 %  N
0.010 - 0.025 %  Ti
        to 0.030 %  Nb
        to 0.020 %  P
        to 0.005 %  S
```

remainder iron and impurities related to steel production is used, wherein the mass ratio Ti/N is greater than 3.5, that the slabs are introduced into the rolling process, which is carried out in two phases, at temperatures of 1100 - 1200° C depending upon the content of micro-alloy elements, where the first rolling phase is carried out with a degree of deformation of at least 30% and the final rolling phase is carried out at temperatures of between 950 and 1050°C, i.e. above the temperature at which precipitation can be induced in the austenitic plating arterial due to the deformation, with a degree of deformation of at least a further 40%, where the degree of deformation in the last rolling pass of the final rolling phase amounts to at least 12% and that the plated metal sheets are chilled immediately thereafter, at a speed of at least 12 K/s, to a temperature of between 450-550°C.

2. A process as claimed in Claim 1,
characterised in that
steel to which chrome and/or molybdenum has been additionally alloyed in order to increase the 0.2% yield strength is used as carrier material, where the total content of these elements is restricted to a maximum of 0,35%.

3. A process as claimed in Claim 1 or 2,
characterised in that
the input temperature of the slabs is 1120°C. 4. A process as claimed in one of Claims 1 to 3, characterised in that
the degree of deformation in the final rolling phase amounts to more than 60%.

5. A process as claimed in one of Claims 1 to 4,
characterised in that
the degree of deformation in the last pass of the final rolling phase amounts to more than 20%.

6. A process as claimed in one of Claims 1 to 5,
characterised in that
when a temperature of between 450 and 550°C is reached, the chilling is interrupted and the further cooling to room temperature is carried out in air.

7. A process as claimed in one of Claims 1 to 5,
characterised in that
the chilling is carried out to room temperature, whereupon the metal sheets are tempered at temperatures of 450 - 650°C.